## Europäisches Patentamt

## European Patent Office

## Office européen des brevets

(19)

(11) Veröffentlichungsnummer: **0 216 131**
**B1**

(12) **EUROPÄISCHE PATENTSCHRIFT**

(45) Veröffentlichungstag der Patentschrift:
31.05.89

(51) Int. Cl.⁴: **G11B 20/10**

(21) Anmeldenummer: **86111401.5**

(22) Anmeldetag: **18.08.86**

(54) Schaltungsanordnung zum Aufbereiten eines analogen Lesesignales bei einem rotierenden Massenspeicher.

(30) Priorität: **20.08.85 DE 3529797**

(43) Veröffentlichungstag der Anmeldung:
**01.04.87 Patentblatt 87/14**

(45) Bekanntmachung des Hinweises auf die Patenterteilung:
**31.05.89 Patentblatt 89/22**

(84) Benannte Vertragsstaaten:
**AT CH DE FR GB IT LI NL SE**

(56) Entgegenhaltungen:
**EP-A- 0 009 599**
**US-A- 3 152 322**
**US-A- 3 458 725**

(73) Patentinhaber: **Siemens Aktiengesellschaft Berlin und München, Wittelsbacherplatz 2, D-8000 München 2(DE)**

(72) Erfinder: **Kranabetter, Johann, Dipl.-Ing., Turnerweg 21 d, D-8200 Rosenheim(DE)**

ACTORUM AG

## Beschreibung

Die Erfindung bezieht sich auf eine Schaltungsanordnung zum Aufbereiten eines analogen Lesesignales bei einem rotierenden Massenspeicher gemäß dem Obergriff des Hauptanspruches (vgl. z.B. US-A 3 458 725).

Ein Beispiel für derartige Massenspeicher ist der Magnetplattenspeicher, bei dem eine Mehrzahl von Speicherplatten zu einem Plattenstapel verbunden, gemeinsam in einem Laufwerk angeordnet ist. Der Plattenstapel wird motorisch über einen Laufwerksmotor mit Nenndrehzahl angetrieben. Den aktiven Oberflächen der Speicherplatten sind jeweils zumeist kombinierte Lese/Schreibköpfe zugeordnet, die zur Spurauswahl radial zum Plattenstapel durch eine Positioniereinrichtung bewegt werden, die als Linearpositionierer oder als Drehpositionierer ausgebildet sein kann.

Beim heutigen Stande der Technik ist den einzelnen Lese/Schreibköpfen zumeist eine sogenannte Kopfelektronik räumlich unmittelbar zugeordnet, die u. a. aus einem Vorverstärker für den Lesenkanal bzw. einer Verstärkerendstufe für den Schreibkanal besteht. Der Plattenstapel kann neben eigentlichen Datenplatten zum Speichern von Dateninformation auch eine sogenannte Servoplatte enthalten, auf der Servoinformation zum Steuern der Spureinstellungsvorgänge für alle Lese/Schreibköpfe gemeinsam fest gespeichert ist. In diesem Fall ist außer den Lese/Schreibköpfen, die den Datenplatten zugeordnet sind, noch ein Servokopf vorgesehen, der mit dieser Servoplatte zusammenarbeitet. Aufgrund der Schnittstellenbedingungen, die sich für Magnetplattenspeicher vielfach bereits als Norm herausgebildet haben und eine verhältnismäßig geringe Datenübertragungsrate festlegen, ist es bei Magnetplattenspeichern üblich, bei Lese- bzw. Schreibvorgängen jeweils nur eines der Systeme bestehend aus Datenplatte und Kopfeinheit selektiv zu aktivieren. Diese Auswahl erfolgt über eine gemeinsame Steuereinrichtung, die der Kopfelektronik des zu selektierenden Systemes ein entsprechendes Auswahlsignal zum Aktivieren zuführt. Diese Steuereinrichtung wird auch dazu benutzt, die entsprechenden Betriebszustände "Lesen" bzw. "Schreiben" im Plattenspeichergerät einzustellen. Sie erzeugt dazu ein entsprechendes statisches Zustandssignal, bei dem jeweils ein Pegel einem dieser Betriebszustände zugeordnet ist. Durch dieses Zustandssignal werden insbesondere alternativ die Lese-und Schreibkanäle geöffnet bzw. gesperrt.

Unter diesen Voraussetzungen ist es üblich, die Kopfelektronik der einzelnen Datenköpfe in bezug auf die Lese- bzw. Schreibkanäle parallel zu schalten und insbesondere die Lesekanäle gemeinsam an eine Auswertungsschaltung anzuschließen, die das gelesene und vorverstärkte analoge Lesesignal zunächst aufbereitet, d. h. weiter verstärkt und filtert, dann digitalisiert und schließlich zum Wiedergewinnen der binären Datensignale decodiert. In der Praxis enthält die Schaltungsanordnung zum Aufbereiten des vorverstärkten analogen Lesesignales einen regelbaren Differenzverstärker als erste Signalformungsstufe, deshalb wird dieser Stufe auch das vorverstärkte analoge Lesesignal als Differenzsignal zugeführt und zumeist über Koppelkondensatoren eingekoppelt. Deshalb sind die Endstufen der Vorverstärker der jeweiligen Kopfelektronik als symmetrische Verstärker ausgebildet, sie können Emitterfolger oder auch Endstufen mit offenem Kollektor sein. Insbesondere im letzteren Fall sind die beiden differentiellen Signaleingänge der Signalaufbereitungseinrichtung jeweils über allen Kopfelektroniken gemeinsame Kollektorwiderstände an Betriebsspannung gelegt.

Die Signalaufbereitungseinrichtung mit ihren Einheiten, wie dem regelbaren Differenzverstärker und dem Filternetzwerk weist, systematisch bedingt, bestimmte Zeitkonstanten auf, die erforderlich sind, um Verzerrungen im analogen Lesesignal zu vermeiden. Hier sind insbesondere die Filterzeitkonstanten bestimmend, die bei leistungsfähigen Plattenspeichergeräten in der Größenordnung von 30 bis 50 µs liegen. Andererseits aber treten bei Umschaltvorgängen, d. h. z. B. bei einem Übergang von dem Betriebszustand "Schreiben" in den Betriebszustand "Lesen" Spannungsspitzen an den differentiellen Signaleingängen der Signalaufbereitungseinrichtung auf, dies gilt sowohl hinsichtlich eines Spannungssprunges auf jeder der differentiellen Signalleitungen als auch hinsichtlich des Potentialunterschiedes zwischen diesen beiden Signalleitungen. Diese Spannungsspitzen bewirken in Verbindung mit den erwähnten Zeitkonstanten einen Einschwingvorgang von beträchtlicher zeitlicher Länge, der bei einer Betriebsweise des Plattenspeichers mit häufigen Wechseln vom Schreibin den Lesezustand und umgekehrt zu einer beeinträchtigenden Leistungsverminderung des Gerätes in Form von relativ langen Zugriffszeiten führt.

Der vorliegenden Erfindung liegt daher die Aufgabe zugrunde, eine Schaltungsanordnung der eingangs genannten Art zu schaffen, bei der trotz der systematisch bedingten Zeitkonstanten in der Signalaufbereitungseinrichtung ein günstiges Einschwingverhalten bei Umschaltvorgängen erreicht und damit eine Verkürzung dieser Vorgänge erreicht wird.

Diese Aufgabe wird erfindungsgemäß bei einer Schaltungsanordnung der eingangs genannten Art durch die im Kennzeichen des Hauptanspruches beschriebenen Merkmale gelöst. Diese Lösung geht von der Tatsache aus, daß üblicherweise das statische Zustandssteuersignal, das den gegenwärtigen Betriebszustand des Plattenspeichergerätes definiert, ohnehin vorhanden ist. Üblicherweise ist bei diesem Steuersignal vor allem der statische Pegel das wesentliche Kriterium. Im vorliegenden Fall wird nun jedoch zusätzlich insbesondere das Auftreten von Signalflanken bei diesem Steuersignal funktionsbestimmend ausgewertet. Das Auftreten einer Signalflanke bedeutet ja, daß gerade ein Umschaltvorgang von einem in den anderen Betriebszustand in Verbindung mit einem solchen kritischen Einschwingvorgang stattfindet. Das Auftreten einer solchen Signalflanke läßt sich daher dazu verwenden, die aktivierte Ausgangsstufe der Vorverstärker und die Funktionseinheiten der Signalaufbereitungseinrichtung während des Umschaltens, aber auch während der Schreibvorgänge voneinander zu trennen und Maßnahmen zu treffen, um die an sich unvermeidbaren Einschwingvorgänge schnell abklingen zu lassen. Dabei übernimmt der in die Signalleitung seriell eingesetzte zweite Analogschalter die Funktion des Auftrennens des Signalweges, während der erste Analogschalter dazu dient, den zugeordneten Koppelkondensator während der Unterbrechung des Signalweges schnell umzuladen.

Weiterbildungen der Erfindung sind in Unteransprüchen beschrieben, ihre Eigenschaften und Vorteile ergeben sich aus der nachfolgenden Beschreibung eines Ausführungsbeispieles.

Ein Ausführungsbeispiel der Erfindung wird im folgenden anhand der Zeichnung näher erläutert. Dabei zeigt:

Fig. 1 ein Blockschaltbild der Schreib/-Leseelektronik eines Magnetplattenspeichers mit den Magnetköpfen zugeordneten Vorverstärkern und einer gemeinsamen Signalaufbereitungseinrichtung,

Fig. 2 ein Schaltbild für ein das Einschwingverhalten bestimmendes Schaltnetzwerk als Eingangsstufe zu der Signalaufbereitungseinrichtung und

Fig. 3 eine Reihe von Impulsdiagrammen zur Erläuterung der Funktion dieser Eingangsstufe der Signalaufbereitungseinrichtung.

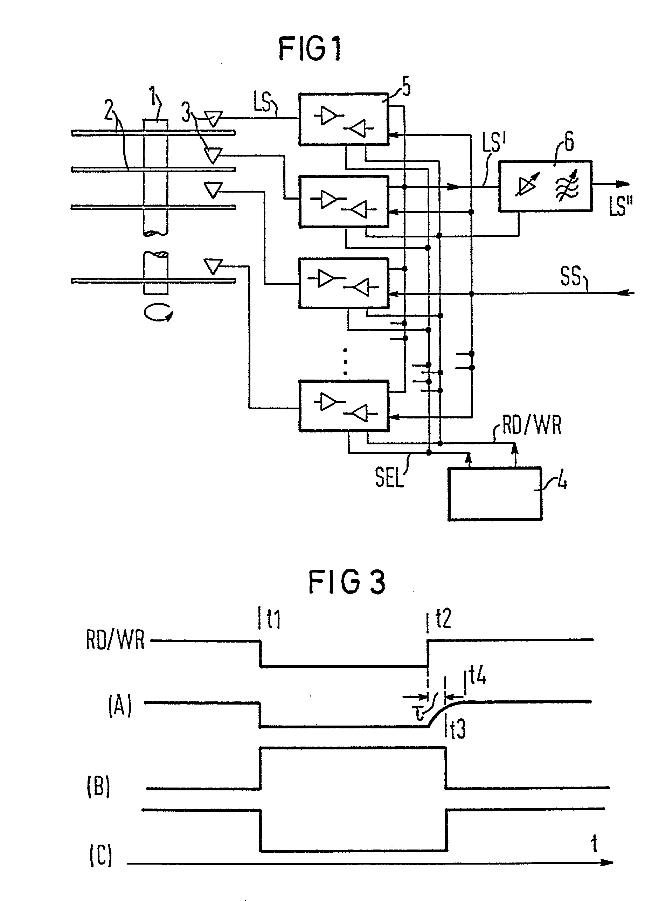

Das in Fig. 1 dargestellte Blockschaltbild zeigt schematisch den bekannten Aufbau der Schreib/Leseelektronik für einen Magnetplattenspeicher. Dazu ist ein Plattenstapel angedeutet, der aus einer Reihe von äquidistant auf einer Plattenstapelnabe 1 angeordneten Magnetplatten 2 besteht. In der schematischen Darstellung von Fig. 1 ist lediglich durch einen Pfeil angedeutet, daß dieser Plattenstapel zum Schreiben oder Lesen von Informationen mit einer bestimmten Nenngeschwindigkeit rotatorisch bewegt wird, um die notwendige Relativgeschwindigkeit zwischen radial positionierbaren Magnetköpfen 3 und der jeweils aktiven Oberfläche einer entsprechenden der Magnetplatten 2 zu erhalten. Für jeden Schreib/Lesevorgang wird eine Datenspur durch radiales Verschieben der Magnetköpfe 3 auf den Magnetplatten 2 ausgewählt und durch ein nicht dargestelltes Positioniersystem diese Spurlage gehalten.

Üblicherweise wird bei Magnetplattenspeichern bei einem solchen Vorgang jeweils eine der Magnetplatten 2 ausgewählt. Dazu wird von einer Gerätesteuerung 4 ein Auswahlsignal SEL erzeugt, das jeweils nur die der ausgewählten Speicherplatte 2 zugeordnete und an den entsprechenden Magnetkopf 3 angeschlossene Kopfelektronik aktiviert. Im Blockschaltbild von Fig. 1 ist diese Kopfelektronik in Form von Verstärkerschaltungen 5 schematisch angedeutet, die in bezug auf ein vom zugeordneten Magnetkopf 3 empfangenes analoges Lesesignal LS einen Vorverstärker bzw. in bezug auf ein zum Magnetkopf 3 zu übertragendes Schreibsignal SS eine Verstärkerendstufe darstellen.

Während die Kopfelektronik jeweils einmal pro Magnetkopf 3 vorgesehen ist, sind die nachfolgenden Einrichtungen für die Verarbeitung des vorverstärkten Lesesignales LS' nur noch einmal vorhanden. Die Verstärkerschaltungen 5 sind daher bezüglich ihrer Ausgänge für den Lesesignalkanal parallel geschaltet und gemeinsam mit dem Eingang einer Signalaufbereitungseinrichtung 6 verbunden, die im wesentlichen aus einem regelbaren Verstärker und entsprechenden Filterstufen besteht, wie in Fig. 1 schematisch angedeutet ist. Am Ausgang dieser Signalaufbereitungseinrichtung wird ein vorverstärktes und bereinigtes Lesesignal LS" abgegeben und in bekannter Weise hier nicht mehr dargestellten weiteren Schaltkreisen zugeführt, die aus dem Analogsignal ein digitales Signal ableiten, das schließlich entsprechend dem gewählten Aufzeichnungsverfahren zu einem Binärsignal decodiert wird.

In umgekehrter Weise wird den dem Schreibsignalkanal zugeordneten Eingängen der Verstärkerschaltungen 5 das digitale Schreibsignal SS z. B. von einer hier nicht mehr dargestellten Steuerung des Magnetplattenspeichers zugeführt, in einer der selektiv aktivierten Verstärkerschaltungen weiter verstärkt, um im Zusammenwirken des angeschlossenen Magnetkopfes 3 und der zugeordneten Oberfläche einer der Speicherplatten 2 auf dieser Oberfläche dem Schreibsignal entsprechende magnetische Flußwechsel zu erzeugen.

Die vorstehend beschriebene Struktur der Schreib/Leseelektronik eines Magnetplattenspeichers ist an sich bekannt und hier daher nur zusammenfassend erläutert. Die beschriebene Anordnung erlaubt für einen bestimmten Schreib- oder Lesevorgang jeweils selektiv eine der Speicherplatten 2 auszuwählen und dort aufgezeichnete Daten zu lesen bzw. in die ausgewählte Spur Daten einzuspeichern. Dies wird mit Hilfe der von der Gerätesteuerung 4 abgegebenen Auswahlsignale SEL bewirkt, die die entsprechende Verstärkerschaltung 5 aktivieren. Der jeweilige Betriebszustand "Schreiben" oder "Lesen" wird durch ein statisches Zustandssteuersignal RD/WR eingestellt.

Bei einem Lesevorgang ist dann z. B. nur die entsprechende Ausgangsstufe eines Lesesignalverstärkers der selektierten Verstärkerschaltung 5 eingeschaltet. Dieses Einschalten ruft beim Übergang vom Schreibzustand auf den Lesezustand eine sprunghafte Signalveränderung hervor, die als Spannungsstoß in der angeschlossenen Signalaufbereitungseinrichtung 6 einen Einschwingvorgang bewirkt. Diese Einrichtung enthält Schaltungen, wie regelbare Verstärker und Filterstufen, die systembedingt relativ große Zeitkonstanten aufweisen, da sonst kritische Verzerrungen beim Verarbeiten des vorverstärkten Lesesignales LS' auftreten würden. Diese Zeitkonstanten wiederum bedingen bei einer direkten Einkopplung des vorverstärkten Lesesignales LS' in die Signalaufbereitungseinrichtung 6 eine lange Einschwingzeit, die im Hinblick auf eine gewünschte kurze Zugriffszeit des Magnetplattenspeichers unerwünscht ist. Deshalb müssen Maßnahmen getroffen werden, das Einschwingverhalten der Signalaufbereitungseinrichtung 6 trotz der systembedingten großen Zeitkonstanten dieser Schaltungsanordnung zu optimieren.

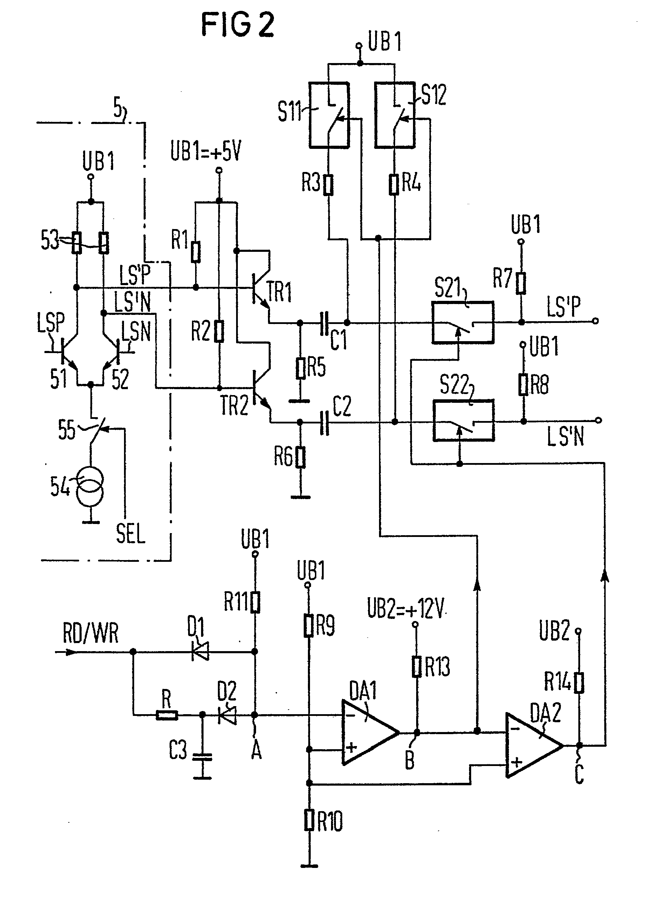

In Fig. 2 ist nun das Schaltbild einer Eingangsstufe der Signalaufbereitungseinrichtung 6 dargestellt, mit der das Einschwingverhalten der Signalaufbereitungseinrichtung gegenüber der konventionellen, direkten Einkopplung des vorverstärkten Lesesignales LS' wesentlich verbessert wird. Um den Zusammenhang mit dem Blockschaltbild von Fig. 1 besser zu verdeutlichen, ist hier zunächst noch eine Ausgangsstufe für das vorverstärkte Lesesignal LS' einer der Verstärkerschaltungen 5 dargestellt. Diese Ausgangsstufe ist hier als sogenannte "open collector"-Schaltung ausgebildet. Dabei sind zwei emittergekoppelte Endstufentransistoren 51 und 52 vorgesehen, deren Basen jeweils die positiven bzw. negativen Teilsignale LSP bzw. LSN des Lesesignales LS zugeführt sind. Die Kollektoren dieser Endstufentransistoren sind jeweils über Ladewiderstände 53 an eine gemeinsame positive Versorgungsspannung UB1 angeschlossen, die hier + 5 V betragen soll. Die Kollektoranschlüsse der beiden Endstufentransistoren bilden die jeweiligen Signalausgänge für das positive bzw. negative Teilsignal LS'P bzw. LS'N des vorverstärkten Lesesignales LS'.

Um eine solche Endstufe in einer der Verstärkerschaltungen 5 selektiv auszuwählen, ist eine Stromquelle 54 vorgesehen, die über einen Schalter 55 an beide Emitter der Endstufentransistoren 51, 52 angeschlossen ist. Dieser Schalter 55 wird über das entsprechende von der Gerätesteuerung 4 abgegebene Auswahlsignal SEL geschaltet und ist im aktivierten Zustand des Lesesignalverstärkers in der ausgewählten Verstärkerschaltung 5 geschlossen.

Diese "open collector"-Schaltung ermöglicht das Parallelschalten mehrerer Lesesignalverstärker bzw. Verstärkerschaltungen 5, wie in Fig. 1 dargestellt. Die Schaltungsanordnung nach Fig. 2 verdeutlicht aber auch, daß wegen der unvermeidbaren Unterschiede der Transistorparameter der Endstufentransistoren 51, 52 bei jedem Anschalten der Stromquelle 54 unvermeidbar eine Gleichtaktverschiebung und eine Offsetstromdrift auftritt. In Fig. 2 ist vereinfacht nur eine einzige Ausgangsstufe einer der Verstärkerschaltungen 5 dargestellt. Tatsächlich sind aber, wie sich aus dem Blockschaltbild von Fig. 1 ergibt, eine Mehrzahl derartiger Ausgangsstufen bezüglich ihrer Ausgänge parallel geschaltet.

Um nun den bei jedem Schalten der Ausgangsstufe einer Verstärkerschaltung 5 auftretenden Spannungsstoß in der Signalaufbereitungseinrichtung 6 mit einer kurzen Einschwingzeit zu beherrschen, besitzt diese Signalaufbereitungseinrichtung eine Eingangsstufe, die mit dem bisher noch nicht beschriebenen Teil der in Fig. 2 dargestellten Schaltungsanordnung realisiert ist. Diese Eingangsstufe, die als Einschwingschaltung bezeichnet werden soll, er laubt, die eigentliche Signalaufbereitungseinrichtung 6, d. h. den regelbaren Verstärker mit den nachgeschalteten Filtern von den Verstärkerschaltungen 5 während der Umschaltvorgänge von dem Schreib- in den Lesezustand und umgekehrt, aber auch während des gesamten Schreibvorganges voneinander zu trennen.

Diese Einschwingschaltung weist zunächst je einen den beiden Signalwegen für die Teilsignale LS'P bzw. LS'N des verstärkten Lesesignales LS' zugeordneten Widerstand R1 bzw. R2 auf, die gemeinsam an die Versorgungsspannung UB1 angeschlossen sind und die Kollektorwiderstände für alle Ausgangsstufen der Verstärkerschaltungen 5 bilden. Außerdem ist jede der beiden, die Teilsignale LS'P bzw. LS'N des vorverstärkten Lesesignales LS' führenden Eingangsleitungen an die Basis je eines Schalttransistors TR1 bzw. TR2 angeschlossen, deren Emitter über je einen Emitterwiderstand R5 bzw. R6 an Masse liegend weiterhin mit je einem seriell angeordneten Koppelkondensator C1 bzw. C2 verbunden sind. Diese Koppelkondensatoren müssen bei einem Umschaltvorgang, z. B. beim Übergang von einem Schreib-in den Lesezustand schnell auf den durch den Sprung der Eingangsspannung bedingten neuen Wert aufgeladen werden. Dazu sind gemeinsam an positiver Betriebsspannung UB1 liegende erste Analogschalter S11 bzw. S12 ausgangsseitig über Vorwiderstände R3 bzw. R4 an die Koppelkondensatoren C1 bzw. C2 angeschlossen.

Wie noch zu beschreiben sein wird, werden die beiden Analogschalter S11 und S12 zu Beginn eines Umschaltevorganges geschlossen und laden die Koppelkondensatoren auf den neuen Wert auf. Zu diesem Zeitpunkt erfolgt eine Entkopplung von der Eingangsseite durch die beiden Trenntransistoren TR1 bzw. TR2, so daß die Aufladung der Koppelkondensatoren C1 bzw. C2 nicht über den Kollektorstrom der eingeschalteten Verstärkerschaltung 5, sondern über die durch die Analogschalter S11, S12 geschlossenen Leitungs wege erfolgt.

In den Leitungszweigen für die beiden Teilsignale LS'P bzw. LS'N des vorverstärkten Lesesignales LS' ist hinter den Koppelkondensatoren C1 bzw. C2 je ein weiterer Analogschalter S21 bzw. S22 seriell angeordnet. Wie ebenfalls noch zu beschreiben sein wird, sind diese zweiten Analogschalter während eines Umschaltevorganges geöffnet und werden erst geschlossen, wenn nach erfolgter Aufladung der Koppelkondensatoren C1 bzw. C2 die ersten Analogschalter S11 bzw. S12 geöffnet sind. Ausgangsseitig liegen die zweiten Analogschalter über weitere Lastwiderstände R7 bzw. R8 jeweils an positiver Betriebsspannung. Die jeweiligen Verbindungspunkte dieser Lastwiderstände R7 bzw. R8 mit den zugeordneten Ausgängen der zweiten Analogschalter S21 bzw. S22 bilden die Signalausgänge für die Einschwingschaltung, die die eingekoppelten Teilsignale LS'P bzw. LS'N in an sich bekannter Weise an entsprechende Eingänge eines regelbaren Lesesignalverstärkers der Signalaufbereitungseinrichtung 6 abgeben.

Die Schaltzeitpunkte der beiden Paare von Analogschaltern S11, S12 bzw. S21 und S22 werden nun mit Hilfe des die Betriebszustände "Schreiben" bzw. "Lesen" bestimmenden Zustands-Steuersignales RD/WR bestimmt, das von der Gerätesteuerung 4 abgegeben und den Verstärkerschaltungen 5, aber auch der Signalaufbereitungseinrichtung 6 zugeführt wird. Dieses Steuersignal ist ein statisches Signal, das bei hohem Pegel den Lesezustand und bei niedrigem Pegel den Schreibzustand des Plattenspeichers bestimmt.

Dieses Zustands-Steuersignal RD/WR wird einem in Fig. 2 dargestellten Schaltnetzwerk zugeführt, dessen Ausgänge mit den Steuereingängen der beiden Paare von Analogschaltern S11, S12 bzw. S21 und S22 verbunden sind. In diesem Schaltnetzwerk ist ein erster Operationsverstärker DA1 vorgesehen, dessen nicht-invertierender Eingang an den Verbindungspunkt eines aus zwei Teilerwiderständen R9 bzw. R10 aufgebauten und zwischen positiver Betriebsspannung UB1 und Masse liegenden Spannungsteilers angeschlossen ist. Der invertierende Eingang des Operationsverstärkers DA1 ist mit einem Schaltungspunkt A bezeichnet. Dieser Schaltungspunkt ist einerseits über einen Vorwiderstand R11 mit der positiven Betriebsspannung UB1 verbunden und andererseits der Ausgang eines Koppelnetzwerkes mit zwei parallelen Leitungszweigen, die gemeinsam an den Eingang des Koppelnetzwerkes angeschlossen sind. Diesem Eingang wird das Zustands-Steuersignal zugeführt. In einem der Leitungszweige ist eine erste Schaltdiode D1 so angeordnet, daß ihre Anode mit dem Schaltungspunkt A verbunden ist. Im zweiten dieser Leitungszweige ist außer einer weiteren, ebenso gepolten Schaltdiode D2 noch ein RC-Zeitglied vorgesehen, das aus einem weiteren Widerstand R12 und einem weiteren Kondensator C3 besteht und zwischen dem Signaleingang und Masse angeordnet ist.

Der Ausgang des ersten Operationsverstärkers DA1 ist über einen ersten Haltewiderstand R13 an eine zweite positive Betriebsspannung UB2 angeschlossen, die z. B. + 12 V betragen kann. Dieser Ausgang, in Fig. 2 als Schaltungspunkt B bezeichnet, ist parallel mit den Steuereingängen des ersten Paares von Analogschaltern S11, S12 und außerdem mit dem invertierenden Eingang eines zweiten Operationsverstärkers DA2 verbunden, dessen nichtinvertierender Eingang wiederum an den Verbindungspunkt des aus den Widerständen R9, R10 gebildeten Spannungsteilers angeschlossen ist. Der als Schaltungspunkt C bezeichnete Ausgang des zweiten Operationsverstärkers ist analog zum ersten Operationsverstärker über einen weiteren Haltewiderstand R14 an die zweite positive Betriebsspannung UB2 gelegt und in analoger Weise mit den Steuereingängen des zweiten Paares von Analogschaltern S21, S22 verbunden.

Die Funktion dieses das Zustands-Steuersignal RD/WR auswertenden Schaltnetzwerkes wird im folgenden anhand der in Fig. 3 dargestellten Impulsdiagramme erläutert. Dort ist in der ersten Zeile eine mögliche Signalform des Zustands-Steuersignales RD/WR dargestellt, bei der zu einem Zeitpunkt t1 eine negative Impulsflanke auftritt, die eine Umschaltung des Plattenspeichers vom Lesezustand in den Schreibzustand definiert.

Mit dieser negativen Flanke des Zustands-Steuersignales RD/WR wird die erste Schaltdiode D1 leitend gesteuert, so daß sich am Schaltungspunkt A unmittelbar und unverzögert ebenfalls ein niedrigerer Pegel einstellt. Dies ist in der zweiten Zeile von Fig. 3 dargestellt, die den Signalverlauf am Schaltungspunkt A zeigt. Ein dementsprechend hoher Signalpegel stellt sich am Schaltungspunkt B, dem Ausgang des ersten Operationsverstärkers, ein, wie aus dem in der dritten Zeile von Fig. 3 dargestellten Signalverlauf an diesem Schaltungspunkt B zu erkennen ist.

Mit diesem hohen Signalpegel wird das erste Paar der Analogschalter S11, S12 geschlossen, so daß die Koppelkondensatoren C1, C2 schnell umgeladen werden. Außerdem bewirkt der hohe Pegel am Schaltungspunkt B, der mit dem invertierenden Eingang des zweiten Operationsverstärkers DA2 verbunden ist, unmittelbar eine Umsteuerung dieses Operationsverstärkers, wie dem in der vierten Zeile von Fig. 3 dargestellten Impulsdiagramm zu entnehmen ist, das den Signalzustand am Schaltungspunkt C wiedergibt. Die am Schaltungspunkt C zum Zeitpunkt t1 auftretende negative Signalflanke bewirkt, daß das zweite Paar von Analogschaltern S21, S22, das im vorausgegangenen Lesevorgang geschlossen war, nunmehr geöffnet wird. Während des an schließenden Schreibvorganges liegen also beide Ausgänge für die Teilsignale LS'P und LS'N des vorverstärkten Lesesignales auf hohem Signalpegel, dies bewirkt, daß der nachgeschaltete, in Fig. 2 nicht mehr dargestellte regelbare Lesesignalverstärker zugesteuert ist.

Gemäß der Darstellung von Fig. 3 soll nun der Plattenspeicher zu einem Zeitpunkt t2 wiederum seinen Betriebszustand ändern, d. h. vom Zustand "Schreiben" in den Zustand "Lesen" übergehen. In diesem Fall wird jedoch die positive Signalflanke des Zustands-Steuersignales RD/WR aufgrund der Wirkung des RC-Zeitgliedes R12, C3 erst um einen Zeitabschnitt τ verzögert am Schaltungspunkt A wirksam. Bei diesem exponentiellen Signalverlauf wird am Ende dieses Zeitabschnittes, d. h. zu einem Zeitpunkt t3 der Schwellenwert für den ersten Operationsverstärker DA1 erreicht, so daß sich zu diesem Zeitpunkt der Signalzustand an seinem Ausgang, dem Schaltungspunkt B, impulsartig ändert. Der sich dabei einstellende niedrige Signalpegel bewirkt unmittelbar das Öffnen des ersten Paares von Analogschaltern S11, S12 und dementsprechend aufgrund des Schaltverhaltens des zweiten Operationsverstärkers DA2 das Schließen des zweiten Paares von Analogverstärkern S21, S22.

Damit ist deutlich, daß das der zweiten Schaltdiode D2 vorgeschaltete RC-Zeitglied R12, C3 diejenige Verzögerungszeit τ bestimmt, während der das erste Paar von Analogschaltern S11, S12 während des Umsteuervorganges noch geschlossen ist und die beiden Koppelkondensatoren C1, C2 schnell auflädt.

Legt man eine realistische Ausführungsform eines Plattenspeichers zugrunde, dann kann man von einer Lesesignalperiode von weniger als 1 μs im Mittel ausgehen. Um Verzerrungen im Lesesignal zu vermeiden und außerdem eine ge wisse Stabilität des an die Einschwingschaltung angeschlossenen, regelbaren Lesesignalverstärkers der Signalaufbereitungseinrichtung 6 zu erhalten, müssen dann Zeitkonstanten in dieser Verarbeitungseinrichtung angesetzt werden, die in der Größenordnung von 30 bis 50 μs liegen. Dagegen soll die effektive Einschwingzeit für das Lesesignal bei einer Umsteuerung des Betriebszustandes des Plattenspeichers wesentlich niedriger liegen. Im Beispiel könnte das ein Wert von ca. 10 µs sein. Dann stünde für die Verzögerungszeit etwa die Hälfte dieser Zeit zur Verfügung und dementsprechend ist das RC-Zeitglied R12, C3 zu dimensionieren.

Dabei ist noch ein weiterer Gesichtspunkt zu berücksichtigen, der sich auf das Umschalten der beiden Paare von Analogschaltern ergibt. Durch dieses Umschalten ändert sich die Belastung an den Koppelkondensatoren C1, C2, woraus sich ein störendes, auch von Phasenlagen des Nutzsignals abhängiges Differenzsignal ergibt, das mit Hilfe der Analogschalter erzielte Wirkung entwerten würde. Dies läßt sich durch mehrere Maßnahmen beherrschen. Wenn einerseits im angenommenen Beispiel das in bezug auf das Zustands-Steuersignal RD/WR wirksame RC-Glied R12, C3 eine wirksame Verzögerungszeit von etwa 5 µs bewirkt, dann ist das aus einem Koppelkondensator C1 bzw. C2, einem der ersten Analogschalter S11 bzw. S12 und dem zugeordneten Vorwiderstand R3 bzw. R4 gebildete Zeitglied so zu bemessen, daß seine Zeitkonstante beispielsweise im Bereich von 2 µs liegt. In diesem Fall ist dann die durch das Anschalten einer Ausgangsstufe in einer der Verstärkerschaltungen 5 bewirkte Störung bereits abgeklungen, bevor die Analogschalter umgeschaltet werden. Die Ladewiderstände R7, R8 sind in bezug auf die Vorwiderstände R3, R4 höher dimensioniert, so daß sich im durchgeschalteten Zustand, also im Lesezustand, in Verbindung mit dem jeweils zugeordneten Koppelkondensator eine höhere Zeitkon stante ergibt, die vor allem der Stabilität, der nachgeordneten Schaltungsanordnungen dient. Jedoch sollen die Widerstandswerte der Ladewiderstände R7, R8 sich von denen der Vorwiderstände R3, R4 um nicht mehr als eine Größenordnung unterscheiden, damit sich dieses Differenzsignal an den Ausgängen der Einschwingschaltung bei der Stromübernahme geringfügiger auswirkt.

Die Erfindung wurde vorstehend anhand eines Ausführungsbeispieles näher beschrieben, ohne sie damit speziell darauf zu beschränken. Im beschriebenen Ausführungsbeispiel wurde z. B. davon ausgegangen, daß in den Verstärkerschaltungen die Ausgangsstufe für das Lesesignal als "open collector"-Schaltung ausgebildet ist. Dies ist jedoch keine zwingende Voraussetzung. Diese Ausgangsstufe könnte auch ein Emitterfolger sein. Auch dann ergaben sich Störspannungen beim An- bzw. Abschalten der Ausgangsstufe, die ohne Gegenmaßnahmen zu übermäßig langen Einschwingzeiten führen. Im beschriebenen Ausführungsbeispiel ist weiterhin von einem Magnetplattenspeicher ausgegangen. Die Erfindung läßt sich darüber hinaus aber auch bei anderen Speichertypen, z. B. magneto-optischen oder optischen Speichern immer dann einsetzen, wenn eine Mehrzahl von Lese- bzw. Schreib/Leseköpfen mit integrierten Verstärkerschaltungen an eine gemeinsame Signalaufbereitungseinrichtung angeschlossen ist und diese Lese- bzw. Schreib/Leseeinrichtungen selektiv aktiviert werden.

Bezugszeichenliste

Fig. 1 1 Plattenstapelnabe
2 Speicherplatten
3 Magnetköpfe
4 Gerätesteuerung
SEL Auswahlsignal
RD/WR Zustands-Steuersignal
5 Verstärkerschaltungen
LS analoges Lesesignal
6 Signalaufbereitungseinrichtung
LS' verstärktes Lesesignal
LS" vorverarbeitetes Lesesignal

Fig. 2 51, 52 Endstufentransistoren
53 Ladewiderstände
LS'P Teilsignal
LS'N Teilsignal
54 Stromquelle
55 Schalter
R1, R2 Kollektorwiderstände
TR1, TR2 Trenntransistoren
C1, C2 Koppelkondensator
R3, R4 Vorwiderstände
S11, S12 Analogschalter
R5, R6 Emitterwiderstände
S21, S22 weitere Analogschalter
R7, R8 Lastwiderstände
DA1 1. Operationsverstärker
R9, R10 Teilerwiderstände
R11 Vorwiderstand
D1 1. Schaltdiode
D2 2. Schaltdiode

## Patentansprüche

1. Schaltungsanordnung zum Aufbereiten eines analogen lesesignales bei einem rotierenden Massenspeicher, bei dem Schreib- und Lesevorgänge durch ein statisches Zustandssignal (RD/WR) einstellbar sind und eine Mehrzahl von Leseköpfen (3) mit zugeordneten Vorverstärkern (5) mit Hilfe eines Auswahlsignales (SEL) selektiv aktivierbar und auf eine gemeinsame Signalaufbereitungseinrichtung (6) zum weiteren Verstärken und Filtern des Lesesignales durchschaltbar ist, dadurch gekennzeichnet, daß der Signalaufbereitungseinrichtung (6) eine Eingangsstufe mit mindestens einem Leitungszug zugeordnet ist, welcher Leitungszug parallel geschaltete Ausgänge der Vorverstärker (5) über einen Koppelkondensator (C1 bzw. C2) an die Signalaufbereitungseinrichtung anschließt und in welchem außerdem ein zwischen Betriebsspannung (UB1) und dem Koppelkondensator angeordneter erster Analogschalter (S11 bzw. S12) und ein seriell im Leitungszug zwischen Koppelkondensator und Signalaufbereitungseinrichtung liegender zweiter Analogschalter (S21 bzw. S22) angeordnet sind, die abgeleitet vom Signalzustand des Zustandssignales (RD/WR) derart gesteuert sind, daß bei einem den nem den Lesezustand einstellenden Zustandswechsel der Koppelkondensator durch kurzzeitiges Aktivieren des ersten Analogschalters schnell umgeladen wird und erst anschließend der Leitungszug durch Schließen des zweiten Analogschalters durchgeschaltet wird.

2. Schaltungsanordnung nach Anspruch 1, dadurch gekennzeichnet, daß vor dem Koppelkondensator (C1 bzw. C2) ein Trenntransistor (TR1 bzw. TR2) zum Verhindern der Umladung des Koppelkondensators über den Ausgangsstrom des aktivierten Vorverstärkers (5) angeordnet ist, wobei der Emitterwiderstand (R5 bzw. R6) dieses Trenntransistors an Masse liegt.

3. Schaltungsanordnung nach einem der Ansprüche 1 oder 2, dadurch gekennzeichnet, daß im Strompfad des ersten Analogschalters (S11, S12) ein Lastwiderstand (R3 bzw. R4) angeordnet und der Ausgang des zweiten Analogschalters (S21, S22) über einen weiteren Lastwiderstand (R7 bzw. R8) an die Betriebsspannung (UB1) angeschaltet ist, dessen Widerstandswert gegenüber dem Widerstandswert des ersten Lastwiderstandes höher ist.

4. Schaltungsanordnung nach einem der Ansprüche 1 bis 3, in Verbindung mit Vorverstärkern, die als Verstärkerstufen mit offenem Kollektor ausgebildet sind, dadurch gekennzeichnet, daß in der Eingangsstufe ein gemeinsamer Kollektorwiderstand (R1 bzw. R2) zwischen dem Eingang für das vorverstärkte Lesesignal (LS'P bzw. LS'N) und der Betriebsspannung (UB1) angeordnet ist.

5. Schaltungsanordnung nach einem der Ansprüche 1 bis 4, dadurch gekennzeichnet, daß den Analogschaltern (S11, S12 bzw. S21, S22) ein Steuernetzwerk zugeordnet ist, dem das Zustandssignal (RD/WR) zugeführt ist und das zwei Differenzverstärker (DA1 bzw. DA2) aufweist, deren nichtinvertierenden Eingängen gemeinsam ein Referenzpotential zugeführt ist, deren Ausgänge (B bzw. C) jeweils über einen Widerstand (R13 bzw. R14) an einer weiteren Betriebsspannung (UB2) liegen und jeweils an den Steuereingang des ersten bzw. des zweiten Analogschalters (S11, S12 bzw. S21, S22) angeschlossen sind, wobei der invertierende Eingang (A) des ersten Differenzverstärkers (DA1) mit dem Signaleingang des Steuernetzwerkes gekoppelt und der invertierende Eingang des zweiten Differenzverstärkers (DA2) mit dem Ausgang (B) des ersten Differenzverstärkers verbunden ist.

6. Schaltungsanordnung nach Anspruch 5, dadurch gekennzeichnet, daß der invertierende Eingang (A) des ersten Differenzverstärkers (DA1) einerseits über einen Vorwiderstand (R11) an die erste Betriebspannung (UB1) gelegt ist und andererseits über zwei parallele Leitungen mit dem das Zustandssignal (RD/WR) empfangenden Signaleingang verbunden ist, daß in einer dieser parallelen Leitungen eine Schaltdiode (D1) anodenseitig an den invertierenden Eingang (A) angeschlossen ist und daß in der anderen Leitung eine ebenso geschaltete, weitere Diode (D2) an den Verbindungspunkt eines weiteren RC-Gliedes (R12, C3) angeschlossen ist, das zwischen dem Signaleingang und Masse angeordnet ist.

7. Schaltungsanordnung nach einem der Ansprüche 1 bis 6, wobei die Vorverstärker (5) als symmetrische Verstärker ausgebildet sind, die als vorverstärktes Lesesignal (LS") ein differentielles Signal, zusammengesetzt aus zwei zueinander inversen Teilsignalen (LS'P bzw. LS'N) erzeugen, dadurch gekennzeichnet, daß in der Eingangsstufe für jedes Teilsignal ein eigener Leitungszweig vorgesehen ist und somit einem Paar von Koppelkondensatoren (C1, C2) je ein Paar von ersten und zweiten Analogschaltern (S11, S12 bzw. S21, S22) entspricht.

## Claims

1. Circuit arrangement for processing an analog read signal in a rotating mass storage unit, in which read and write processes can be adjusted by a static status signal (RD/WR) and a plurality of read heads (3) with associated preamplifiers (5) can be selectively activated and switched through to a common signal processing device (6) for further amplification and filtering of the read signal with the aid of a selection signal (SEL), characterized in that the signal processing device (6) is associated with an input stage having at least one conductor run, which conductor run connects parallel-connected outputs of the preamplifiers (5) via a coupling capacitor (C1 and C2, respectively) to the signal processing device and in which, in addition, a first analog switch (S11 and S12) arranged between the operating voltage (UB1) and the coupling capacitor and a second analog switch (S21 and S22), serially located in the conductor run between coupling capacitor and signalling processing device are arranged which, in derivation from the signal status of the status signal (RD/WR), are controlled in such a manner that in the case of a status change, which sets the read status, the coupling capacitor is rapidly recharged by short-time activation of the first analog switch and the conductor run is only subsequently switched through by closing of the second analog switch.

2. Circuit arrangement according to Claim 1, characterized in that in front of the coupling capacitor (C1 and C2, respectively), an isolating transistor (TR1 and TR2) is arranged for preventing the recharging of the coupling capacitor via the output current of the activated preamplifier (5), the emitter resistor (R5 and R6, respectively) of this isolating transistor being connected to earth.

3. Circuit arrangement according to one of Claims 1 or 2, characterized in that a load resistor (R3 and R4, respectively) is arranged in the current path of the first analog switch (S11, S12) and the output of the second analog switch (S21, S22) is connected via a further load resistor (R7 and R8, respectively) to the operating voltage (UB1), the resistance value of which load resistor is higher than the resistance value of the first load resistor.

4. Circuit arrangement according to one of Claims 1 to 3, in conjunction with preamplifiers which are constructed as open-corrector amplifier stages, characterized in that a common collector resistor (R1 and R2, respectively) is arranged in the input stage between the inputs of the preamplified read signal (LS'P and LS'N) and the operating voltage (UB1).

5. Circuit arrangement according to one of Claims 1 to 4, characterized in that the analog switches (S11, S12 and S21, S22) are associated with a control network which is supplied with the status signal (RD/WR) and which exhibits two differential amplifiers (DA1 and DA2) to the non-inverting inputs of which a reference potential is jointly supplied, the outputs (B and C) of which are in each case connected via a resistor (R13 and R14) to a further operating voltage (UB2) and are in each case connected to the control input of the first and the second analog switch (S11, S12 and S21, S22), the inverting input (A) of the first differential amplifier (DA1) being coupled to the signal input of the control network and the inverting input of the second differential amplifier (DA2) being connected to the output (B) of the first differential amplifier.

6. Circuit arrangement according to Claim 5, characterized in that the inverting input (A) of the first differential amplifier (DA1), on the one hand, is connected via a series resistor (R11) to the first operating voltage (UB1) and, on the other hand, is connected via two parallel lines to the signal input receiving the status signal (RD/WR), that in one of these parallel lines, a switching diode (D1) is connected to the inverting input (A) at the anode side and that in the other line a further diode (D2), which is similarly connected, is connected to the junction of a further RC section (R12, C3) which is arranged between the signal input and earth.

7. Circuit arrangement according to one of Claims 1 to 6, in which the preamplifiers (5) are constructed as balanced amplifiers which generate as the preamplified read signal (LP') a differential signal composed of two part signals (LP'P and LS'N) which are inverse with respect to one another, characterized in that in the input stage for each part signal, a separate line branch is provided and thus a pair of coupling capacitors (C1, C2) in each case corresponds to a pair of first and second analog switches (S11, S12 and S21, S22).

## Revendications

1. Montage pour préparer un signal analogique de lecture dans le cas d'une mémoire de masse rotative, dans laquelle des processus d'enregistrement et de lecture peuvent être réglés au moyen d'un signal statique d'état (RD/WR), et une multiplicité de têtes de lecture (3), auxquelles sont associés des préamplificateurs (5), peuvent être activées, de façon sélective, à l'aide d'un signal de sélection (SEL) et peuvent être interconnectées à un dispositif commun (6) d'élaboration du signal, pour l'amplification et le filtrage ultérieurs du signal de lecture, caractérisé par le fait qu'au dispositif (6) d'élaboration du signal est associé un étage d'entrée qui comporte au moins une ligne de transmission, qui raccorde des sorties, branchées en parallèle, des préamplificateurs (5) par l'intermédiaire d'un condensateur de couplage (C1 ou C2) au dispositif d'élaboration du signal et dans laquelle sont disposés, en outre, un premier interrupteur analogique (S11 ou S12) et un second interrupteur analogique (S21 ou S22), qui est branché en série dans la voie de transmission entre le condensateur de couplage et le dispositif d'élaboration du signal, ces interrupteurs étant commandés à partir de l'état du signal d'état (RD/WR) de telle sorte que, dans le cas d'un changement d'état réglant l'état de lecture, le condensateur de couplage est déchargé rapidement sous l'effet d'une activation de brève durée du premier interrupteur analogique, et, ensuite seulement, la voie de transmission est interconnectée sous l'effet de la fermeture du second interrupteur analogique.

2. Montage suivant la revendication 1, caractérisé par le fait qu'en amont du condensateur de couplage (C1 ou C2) est branché un transistor de séparation (TR1 ou TR2), qui sert à empêcher la décharge du condensateur de couplage sous l'effet du courant de sortie du préamplificateur (5) activé, la résistance (R5 ou 56) de l'émetteur de ce transistor de séparation étant raccordée à la masse.

3. Montage suivant l'une des revendications 1 ou 2, caractérisé par le fait qu'une résistance de charge (R3 ou R4) est montée dans la voie de courant du premier interrupteur analogique (S11, S12), et que la sortie du second interrupteur analogique (S21, S22) est raccordée à la tension de service (UB) par l'intermédiaire d'une autre résistance de charge (R7 ou R8), dont la valeur résistive est supérieure à la valeur résistive de la première résistance de charge.

4. Montage suivant l'une des revendications 1 à 3, en liaison avec des préamplificateurs réalisés sous la forme d'étages amplificateurs à collecteur ouvert, caractérisé par le fait qu'une résistance commune de collecteur (R1 ou R2) est branchée, dans l'étage d'entrée, entre l'entrée prévue pour le signal de lecture préamplifié (LS'P ou LS'N) et la tension de service (UB).

5. Montage suivant l'une des revendications 1 à 4, caractérisé par le fait qu'aux interrupteurs analogiques (S11, S12 ou S21, S22) est associé un réseau de commande, auquel est envoyé le signal d'état (RD/WR) et qui contient deux amplificateurs différentiels (DA1 ou DA2), aux entrées non inverseuses desquels est appliqué en commun un potentiel de référence, et dont les sorties (B ou C) sont raccordées à une autre tension de service (UB2), respectivement par l'intermédiaire d'une résistance (R13 ou R14) et sont reliées respectivement à l'entrée de commande du premier ou du second interrupteur analogique (S11, S12 ou S21, S22), l'entrée inverseuse (A) du premier amplificateur différentiel (DA1) étant accouplée à l'entrée du signal du réseau de commande et l'entrée inverseuse du second amplificateur différentiel (DA2) étant reliés à la sortie (B) du premier amplificateur différentiel.

6. Montage suivant la revendication 5, caractérisé par le fait que l'entrée inverseuse (A) du premier amplificateur différentiel (DA1) est raccordée d'une part par l'intermédiaire d'une résistance additionnelle (R11), à la première tension de service (UB1) et, d'autre part, par l'intermédiaire de deux lignes parallèles, à l'entrée du signal, qui reçoit le signal d'état (RD/WR), que, dans l'une de ces deux lignes parallèles, une diode de commutation (D1) est raccordée, par son anode, à l'entrée inverseuse (A), et que, dans l'autre ligne, une autre diode (D2) branchée de la même manière est raccordée au point de jonction d'un autre circuit RC (R12, C3), qui est disposé entre l'entrée du signal et la masse.

7. Montage suivant l'une des revendications 1 à 6, dans lequel les préamplificateurs (5) sont agencés sous la forme d'amplificateurs symétriques qui produisent, en tant que signal de lecture préamplifié (LS'), un signal différentiel, constitué par deux signaux partiels (LP'P ou LS'N) inverses l'un de l'autre, caractérisé par le fait que, dans l'étage d'entrée, un élément de ligne particulier est prévu pour chaque signal partiel et que, par conséquent, un couple de premier et second interrupteurs analogiques (S11, S12 ou S21, S22) correspond respectivement à un couple de condensateurs de couplage (C1, C2).

# FIG 1

# FIG 3

# FIG 2